# EUROPEAN PATENT SPECIFICATION

(11) **EP 3 613 902 B1**
(45) Date of publication and mention of the grant of the patent: **23.08.2023**
(21) Application number: 17905287.3
(22) Date of filing: 30.10.2017
(51) Int. Cl.: E02B 3/26

(54) **FENDER DEVICE**
FENDERVORRICHTUNG
DISPOSITIF DE DÉFENSE

(30) Priority: 12.04.2017 JP 2017078913
(43) Date of publication of application: 26.02.2020
(73) Proprietor: Sumitomo Rubber Industries Ltd., Kobe-shi, Hyogo 651-0072 (JP)
(72) Inventor: FUJISAWA, Kazuhiro, Kobe-shi, Hyogo 651-0072 (JP); MARUYAMA, Tatsuya, Kobe-shi, Hyogo 651-0072 (JP)
(74) Representative: Becker Kurig & Partner Patentanwälte mbB
(86) International application number: PCT/JP2017/039022
(87) International publication number: WO 2018/189941

(56) References cited:
- WO-A1-97/01479
- WO-A1-03/056106
- JP-A- S6 055 111
- JP-A- S54 121 529
- JP-A- 2001 172 940
- JP-A- 2013 028 908
- JP-A- 2017 040 060
- JP-Y1- S4 915 516
- US-A- 5 458 077

## Description

### Technical Field

The present invention relates to a fender device for protecting a ship during berthing.

### Related Art

A fender device may be installed on a boarding surface of a quay or a pier or the like in order to alleviate shock during berthing of a ship at the boarding surface. There are various types of fender devices existing, one type including a tubular shock-absorbing member installed so that a center axis is along a normal direction of the boarding surface (see Patent Documents 1 and 2). Typically, the shock-absorbing member is made of an elastic material such as rubber or the like, and absorbs energy of the shock by being compressively deformed in the direction of the center axis when pushed by the ship. Accordingly, damage to the ship and the boarding surface can be avoided.

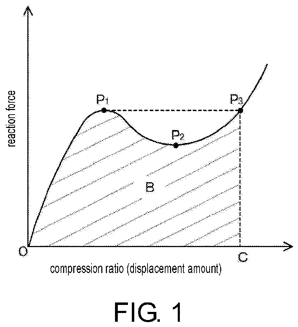

FIG. 1 shows a characteristic curve indicating a relationship between compression ratio and reaction force when a shock-absorbing member of the above type is compressed. As shown in the same figure, in this type of shock-absorbing member, as the shock-absorbing member is pushed by the ship and the compression progresses, the reaction force gradually increases from an origin O corresponding to a state in which the shock-absorbing member is not being compressed, and the shock-absorbing member buckles when a certain point (maximum point P₁) is reached. After that, although the reaction force gradually decreases due to the buckling, when a certain point (minimum point P₂) is reached, the shock-absorbing member starts to behave as a rubber mass. For that reason, the reaction force turns to increase again at point P₂, passes through point P₃ at which the reaction force is the same as at point Pi, and the reaction force continues to increase even after that.

Generally, in the shock-absorbing member as above, a range of the compression ratio at which the purpose of fenders can be achieved is set to a range until reaching a compression ratio (hereinafter "critical compression ratio") C corresponding to point P₃. This is because the reaction force may become too high at point P₃ onward, and problems such as damage to the ship body and so on may be caused. The amount of the energy that can be absorbed by the shock-absorbing member in the compression ratio range of 0 to C is equivalent to an area B of a region surrounded by the characteristic curve, the horizontal axis passing through the origin O and the vertical axis passing through point P₃. Therefore, it is important to increase the area B in the fender device.

In this regard, Patent Document 1 discloses a fender device in which a convex part is provided along a peripheral direction on an inner surface of a hollow truncated cone-shaped shock-absorbing member. In Patent Document 1, due to the presence of this convex part, a timing at which the inner surfaces on both sides of the convex part contact each other is delayed. Accordingly, the amount of the energy that can be absorbed by the shock-absorbing member until reaching the critical compression ratio, i.e., the area B, is increased. Patent Document 3 discloses a fender integrally formed of an elastic body such as which increases the usable reaction and displacement amount by setting the inclination angle of the first and second impact supports. Patent Document 4 discloses a fender with a simpler structure which can regulate the folding in the middle of an axial direction. Patent Document 5 discloses a fender adapted to protect infrastructure or the operation in transportation.

### Prior-Art Documents

### Patent Documents

Patent Document 1: Japanese Laid-open No. 2001-172940
Patent Document 2: Japanese Laid-open No. 2016-148240
Patent Document 3: WO Laid-open No. 2003-056106 A1
Patent Document 4: Japanese Laid-open No. 2013-028908 A
Patent Document 5: Japanese Laid-open No. 54121529 A

### SUMMARY OF THE INVENTION

### Problems to Be Solved by the Invention

However, in recent years, while attention is being paid to environmental problems, fender devices, if of the same size, are desired to have a larger energy absorption amount, and, if having the same energy absorption amount, are desired to be smaller in size, and there is an increasing demand for fender devices with higher shock-absorbing performance.

The present invention aims to improve the shock-absorbing performance of a fender device.

### Means for Solving the Problems

A fender device according to a first aspect of the present invention is a fender device attached to a boarding surface at which a ship berths, the fender device including a tubular shock-absorbing member. The shock-absorbing member is made of an elastic material, has a center axis extending in a normal direction of the boarding surface, is compressed in the direction of the center axis, and buckles in a compression process. The shock-absorbing member has an inner surface, and includes a first convex part that is formed on the inner surface along a peripheral direction during non-compression and a second convex part that is formed in the vicinity of the first convex part on the inner surface along the peripheral direction during non-compression. The inner surface includes a first peripheral line, a second peripheral line, and a third peripheral line. The first peripheral line defines a boundary of the first convex part that is a boundary opposite the second convex part. The second peripheral line defines a boundary of the first convex part that is a boundary on the second convex part side. The third peripheral line defines a boundary of the second convex part that is a boundary opposite the first convex part. The shock-absorbing member bends along the first peripheral line and the second peripheral line during buckling. A line representing the inner surface on a cross section of the shock-absorbing member is not smoothly continuous at a position of a point representing the first peripheral line during non-compression of the shock-absorbing member. A line representing the inner surface on a cross section of the shock-absorbing member is smoothly continuous before and after a point representing the third peripheral line during non-compression of the shock-absorbing member.

A fender device according to a second aspect of the present invention is the fender device according to the first aspect, wherein the first convex part is disposed inside a part of the shock-absorbing member that bends so as to protrude outward during buckling of the shock-absorbing member.

A fender device according to a third aspect of the present invention is the fender device according to the first aspect or the second aspect, wherein a boundary of the second convex part on the first convex part side is defined by the second peripheral line.

A fender device according to a fourth aspect of the present invention is the fender device according to any one of the first to third aspects, wherein during buckling of the shock-absorbing member, a portion on the first convex part side included in the second convex part makes surface contact along the peripheral direction with a portion on the second convex part side included in the first convex part.

A fender device according to a fifth aspect of the present invention is the fender device according to any one of the first to fourth aspects, wherein the shock-absorbing member is roughly in a shape of a hollow truncated cone and has a first end face along the normal direction of the boarding surface and a second end face larger in diameter than the first end face.

A fender device according to a sixth aspect of the present invention is the fender device according to the fifth aspect, wherein the second convex part is disposed on a second end face side of the first convex part.

A fender device according to a seventh aspect of the present invention is the fender device according to the fifth aspect or the sixth aspect, wherein during 50% compression of the shock-absorbing member, the first peripheral line is located closer to the first end face side than the second peripheral line.

A fender device according to an eighth aspect of the present invention is the fender device according to any one of the fifth to seventh aspects, wherein during 70% compression of the shock-absorbing member, the first peripheral line is located closer to the first end face side than the second peripheral line.

A fender device according to a ninth aspect of the present invention is the fender device according to any one of the fifth to eighth aspects, wherein during compression of the shock-absorbing member at a critical compression ratio, the first peripheral line is located closer to the first end face side than the second peripheral line.

A fender device according to a tenth aspect of the present invention is the fender device according to any one of the first to ninth aspects, wherein the first convex part is continuously formed over an entire circumference of the inner surface of the shock-absorbing member.

A fender device according to an eleventh aspect of the present invention is the fender device according to any one of the first to tenth aspects, wherein the second convex part is continuously formed over an entire circumference of the inner surface of the shock-absorbing member.

A fender device according to a twelfth aspect of the present invention is the fender device according to any one of the first to eleventh aspects, further including a shock-receiving member disposed on the ship side of the shock-absorbing member and contacting the ship.

### Effects of the Invention

The tubular shock-absorbing member included in the fender device according to the present invention is made of the elastic material, has the center axis extending in the normal direction of the boarding surface, is compressed in the direction of the center axis, and buckles in the compression process. The first and second convex parts extending along the peripheral direction are formed on the inner surface of the shock-absorbing member during non-compression, wherein the second convex part is disposed in the vicinity of the first convex part. The shock-absorbing member is configured to bend along the first and second peripheral lines on both sides of the first convex part during buckling. As a result, it becomes difficult to compress the shock-absorbing member due to the presence of the first convex part, and the shock-absorbing member thus increases in the critical compression ratio. In addition, since the second convex part supports the first convex part during compression, it becomes difficult for the first convex part to fall down and it thus becomes more difficult to compress the shock-absorbing member, and the shock-absorbing member further increases in the critical compression ratio. Accordingly, the shock-absorbing performance of the fender device is improved.

### BRIEF DESCRIPTION OF THE DRAWINGS

FIG. 1 illustrates a characteristic curve indicating a relationship between compression ratio and reaction force when a shock-absorbing member is compressed.
FIG. 2 is a cross-sectional view showing a state in which a fender device according to an embodiment of the present invention is installed on a boarding surface (during non-compression).
FIG. 3 is a perspective view of a shock-absorbing member.
FIG. 4 is a cross-sectional view showing a state of the fender device of FIG. 2 during compression.
FIG. 5 are cross-sectional views of shock-absorbing members according to an example and a comparative example at various compression ratios.
FIG. 6 illustrates characteristic curves when the shock-absorbing members according to the example and the comparative example are compressed.

### DESCRIPTION OF THE EMBODIMENTS

A fender device according to an embodiment of the present invention is hereinafter explained with reference to the drawings.

### <1. Overall Configuration of Fender Device>

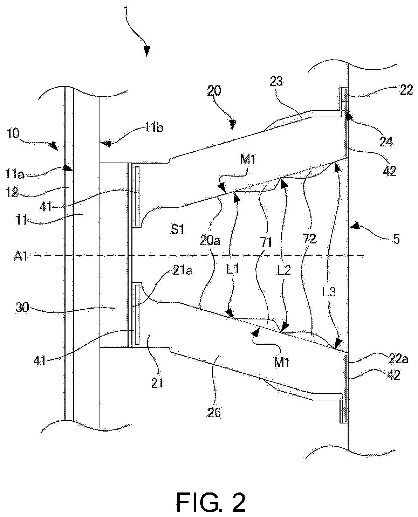

FIG. 2 shows a cross-sectional view of a fender device 1 according to the present embodiment. The fender device 1 is attached to a boarding surface 5 of a quay or a pier or the like at which a ship berths, and alleviates shock during berthing of the ship at the boarding surface 5. The fender device 1 includes a shock-receiving member 10 in direct contact with a side surface of the ship or the like, and further includes an elastically deformable shock-absorbing member 20 between the shock-receiving member 10 and the boarding surface 5. When the ship berths, by being compressively deformed between the shock-receiving member 10 and the boarding surface 5, the shock-absorbing member 20 absorbs energy received by the shock-receiving member 10 due to collision with the ship, thereby protecting both the ship and boarding surface 5. FIG. 2 shows a normal state in which no external force is applied to the shock-receiving member 10, i.e., the fender device 1 during non-compression of the shock-absorbing member 20.

The shock-receiving member 10 is disposed on a ship side of the shock-absorbing member 20 along a normal direction (hereinafter "direction A1") of the boarding surface 5. The shock-receiving member 10 has a shock-receiving plate 11 made of steel. A surface member 12 made of a material having lower rigidity is fixed to an outer surface 11a on the ship side of the shock-receiving plate 11 in order to prevent damage to the ship. Typically, the surface member 12 is made of rubber or resin. During non-compression of the shock-absorbing member 20, the shock-receiving plate 11 is installed parallel or substantially parallel to the boarding surface 5. Not only in the part of the shock-receiving plate 11, the shock-receiving member 10 as a whole has a platelike shape . However, the shape does not matter as long as the shock-receiving member 10 is capable of appropriately receiving the side surface of the ship or the like. In addition, the material of the shock-receiving plate 11 is not limited to steel but may be other metal, or may be resin or ceramic, as long as the rigidity suitable for the function as the shock-receiving plate can be secured. Moreover, the surface member 12 can also be omitted.

The shock-absorbing member 20 is disposed on the boarding surface 5 side of the shock-receiving plate 11 along the direction A1. More specifically, the shock-absorbing member 20 is attached to a back surface 11b side of the shock-receiving plate 11 with a spacer 30 sandwiched therebetween. The spacer 30 is disposed between the shock-receiving plate 11 and the shock-absorbing member 20 along the direction A1 during non-compression of the shock-absorbing member 20. The spacer 30 is a cylindrical member whose center axis extends parallel or substantially parallel to the direction A1. Moreover, the shape of the spacer 30 is not limited to this example and may be, for example, a ring shape or a prism shape.

The spacer 30 is directly connected to the back surface 11b of the shock-receiving plate 11. A mode of the connection can be appropriately selected. Typically, the connection can be achieved by welding and/or by using a fastener such as a bolt or the like. In other embodiments, the spacer 30 can be omitted, and the shock-receiving plate 11 and the shock-absorbing member 20 can be directly connected. However, the spacer 30 has a function of increasing a critical compression ratio C of the shock-absorbing member 20 and thus increasing the amount of energy that can be absorbed by the shock-absorbing member 20; in that respect, it is preferable to provide the spacer 30. The material of the spacer 30 is not particularly limited. Although the spacer 30 is made of steel in the present embodiment, it may be made of other metal, or may be made of resin or ceramic, as long as the above function can be secured.

The shock-absorbing member 20 is directly connected to the boarding surface 5 side of the spacer 30. A mode of the connection can be appropriately selected. Typically, the connection can be achieved by using a fastener such as a bolt or the like. For example, the connection can be achieved by inserting a bolt into a screwless bolt hole of the spacer 30 and fixing the bolt by a cap nut embedded in the shock-absorbing member 20.

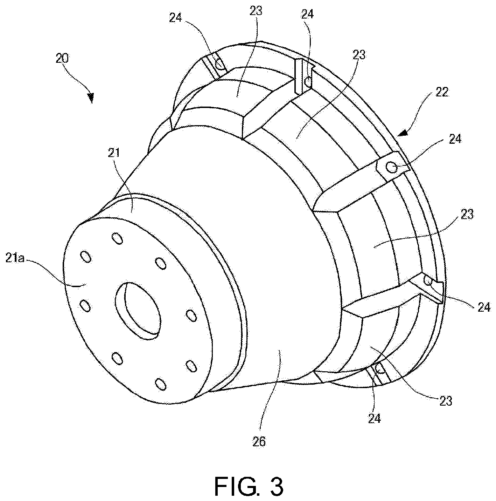

FIG. 3 is a perspective view of the shock-absorbing member 20. As shown in FIG. 2 and FIG. 3, the shock-absorbing member 20 has a roughly truncated conical outer shape having a center axis extending parallel or substantially parallel to the direction A1, and is composed of a hollow structure forming an internal space S1. The internal space S1 is roughly closed by the boarding surface 5 and the spacer 30 when the shock-absorbing member 20 is attached to the boarding surface 5. The shock-absorbing member 20 has a first end face 21a and a second end face 22a along the direction A1, and the second end face 22a is larger in diameter than the first end face 21a. In other words, the shock-absorbing member 20 is a tubular member gradually increasing in diameter along the direction A1 from the first end face 21a side to the second end face 22a side. However, as shown in FIG. 2 and FIG. 3, an end part 21 on the first end face 21a side is cylindrical without increasing in diameter along the direction A1, and is directly connected to the spacer 30 at the first end face 21a. Meanwhile, an end part 22 on the second end face 22a side has a flange shape with respect to a body part 26 of the shock-absorbing member 20. Therefore, in the following, the end part 22 may be referred to as flange part 22.

The flange part 22 is in the shape of a thin ring having a roughly constant diameter along the direction A1. In the present embodiment, the end part 21, the body part 26 and the flange part 22 are disposed coaxially with the direction A1 as the center axis, and are continuous in this order from the shock-receiving plate 11 side to the boarding surface 5 side along the direction A1. In other words, the first end face 21a is disposed on the shock-receiving plate 11 side, and the second end face 22a is disposed on the boarding surface 5 side. According to the above, more accurately, the body part 26 rather than the shock-absorbing member 20 is configured in a tubular shape having a roughly truncated conical outer shape, gradually increasing in diameter along the direction A1.

As shown in FIG. 2, the body part 26 has a roughly constant thickness except for a first convex part 71 and a second convex part 72 to be described later. The end parts 21 and 22 are wider in a radial direction (larger in thickness) than the body part 26. This is because the end parts 21 and 22 are attachment parts and require sufficient rigidity, and this makes it easier for the end parts 21 and 22 to be embedded in later-described steel plates 41 and 42 and be attached to the boarding surface 5. Unless otherwise specified, "radial direction" and "peripheral direction" are based on the center axis of the shock-absorbing member 20.

The flange part 22 is directly connected to the boarding surface 5 at the second end face 22a. The boarding surface 5 is generally composed of concrete. Hence, in the flange part 22, through holes 24 extending parallel or substantially parallel to the direction A1 are formed at a plurality of positions along the peripheral direction, and fasteners such as bolts or the like are inserted into the boarding surface 5 via the through holes 24. Accordingly, the fender device 1 is firmly fixed to the boarding surface 5. In this way, since the through holes 24 serve to fix the fender device 1 and the boarding surface 5, they are preferably disposed at constant intervals in the peripheral direction so that an external force applied to the fender device 1 is equally distributed. In addition, in a part of an outer surface of the body part 26 of the shock-absorbing member 20 in the vicinity of the flange part 22 along direction A1, a plurality of convex parts 23 protruding outward in the radial direction are formed along the peripheral direction. The convex parts 23 and the through holes 24 are alternately disposed along the peripheral direction.

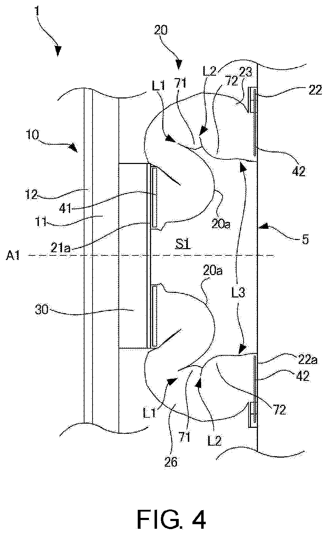

The shock-absorbing member 20 is made of an elastic material, receives the energy of collision with the ship and can be compressively deformed in the direction A1. That is, when an external force is applied in a direction from the ship to the boarding surface 5 side, by bending so as to protrude outward in the radial direction, the shock-absorbing member 20 is compressively deformed in the direction A1 (see FIG. 4). At this moment, the shock-absorbing member 20 buckles in the compression process. In addition, the shock-absorbing member 20 is restored to its original shape when the external force is removed. Although the material of the shock-absorbing member 20 does not matter as long as the elasticity suitable for the function as the shock-absorbing member can be ensured, the shock-absorbing member 20 is typically made of elastomer or rubber, and elastomers or rubbers of various compositions can be used. FIG. 4 shows the fender device 1 in a state in which an external force in the direction A1 is applied to the shock-receiving plate 11 in the normal state of FIG. 2, and whereby the shock-absorbing member 20 is compressively deformed in the direction A1. When a compressive force in the direction A1 is applied to the shock-absorbing member 20, the above-mentioned convex parts 23 are useful for compressively deforming the shock-absorbing member 20 into a constant shape, and are capable of stabilizing amount of energy absorption by compressive deformation. The convex parts 23 are also preferably disposed at constant intervals in the peripheral direction.

As shown in FIG. 2 and FIG. 4, in the end parts 21 and 22 of the shock-absorbing member 20, the ring-shaped steel plates (iron plates) 41 and 42 are embedded respectively. The steel plates 41 and 42 have a constant thickness in the direction A1, and respectively serve to improve strength of the end parts 21 and 22 of the shock-absorbing member 20. In addition, the steel plates 41 and 42 also serve to improve connection strength between the end parts 21, 22 and the spacer 30 and the boarding surface 5, respectively, and the fasteners such as bolts or the like for the above-mentioned connection are attached so as to penetrate the steel plates 41 and 42.

It is described in the above that the shock-absorbing member 20 is compressively deformed in the direction A1 by bending so as to protrude outward in the radial direction. However, it is mainly the body part 26 in the shock-absorbing member 20 that is compressively deformed in such a mode. Even if an external force is applied in the direction from the ship to the boarding surface 5 side, unlike the body part 26, the end parts 21 and 22 do not bend so as to protrude outward in the radial direction and are hardly compressively deformed in the direction A1.

### <2. Configuration of Inner Surface of Shock-absorbing Member>

Hereinafter, a configuration of an inner surface 20a of the shock-absorbing member 20 is explained in detail. In the shock-absorbing member 20, by configuring the inner surface 20a thereof as follows, the energy absorption amount until the shock-absorbing member 20 reaches the critical compression ratio C (the compression ratio corresponding to point P₃ in FIG. 1), i.e., the area B, increases. The compression ratio is given by (Q1-Q2)×100/Q1(%), where a length of the shock-absorbing member 20 in the direction A1 when no external force is applied and the shock-absorbing member 20 is not compressed at all is set to Q1, and the length of the shock-absorbing member 20 during compression of the shock-absorbing member 20 is set to Q2. That is, when a displacement amount of the first end face 21a of the shock-absorbing member 20 in the direction A1 is set to d1, the compression ratio is given by d1×100/Q1(%).

As shown in FIG. 2, the first convex part 71 and the second convex part 72 are formed on the inner surface 20a of the body part 26 of the shock-absorbing member 20 during non-compression of the shock-absorbing member 20. The second convex part 72 is disposed in the vicinity of the first convex part 71, and in the present embodiment, is disposed on the second end face 22a side (i.e., on the boarding surface 5 side) of the first convex part 71 along the direction A1. The first convex part 71 and the second convex part 72 are each formed along the peripheral direction, and in the present embodiment, are each continuously formed without interruption over the entire circumference.

A boundary of the first convex part 71 that is a boundary opposite the second convex part 72 is defined by a first peripheral line L1 extending along the peripheral direction. A boundary of the first convex part 71 that is a boundary on the second convex part 72 side is defined by a second peripheral line L2 extending along the peripheral direction. In addition, in the present embodiment, the first convex part 71 and the second convex part 72 are adjacent to each other. Hence, a boundary of the second convex part 72 that is a boundary on the first convex part 71 side is defined by the second peripheral line L2. A boundary of the second convex part 72 that is a boundary opposite the first convex part 71 is defined by a third peripheral line L3.

During non-compression of the shock-absorbing member 20, on a cross section of the shock-absorbing member 20, the inner surface 20a of the shock-absorbing member 20, excluding the first convex part 71 and the second convex part 72, extends linearly from the vicinity of the first end face 21a to the second end face 22a. This straight line is indicated by M1 in FIG. 2. The first convex part 71 and the second convex part 72 are formed on the straight line M1. That is, the first convex part 71 is a portion protruding inward in the radial direction from a surface (indicated by a dotted line in FIG. 2) linearly connecting the peripheral lines L1 and L2 on the cross section of the shock-absorbing member 20. Similarly, the second convex part 72 is a portion protruding inward in the radial direction from a surface (indicated by a dotted line in FIG. 2) linearly connecting the peripheral lines L2 and L3 on the cross section of the shock-absorbing member 20.

In the present invention, the line representing the inner surface 20a on the cross section of the shock-absorbing member 20 is not smoothly continuous at a position of a point representing the peripheral line L1 during non-compression of the shock-absorbing member 20 (not differentiable at the position of the point representing the peripheral line L1). In addition, the same line is not smoothly continuous even at a position of a point representing the peripheral line L2 (not differentiable at the position of the point representing the peripheral line L2). On the other hand, in the present invention, the line representing the inner surface 20a on the cross section of the shock-absorbing member 20 is smoothly continuous before and after a point representing the peripheral line L3 during non-compression of the shock-absorbing member 20 (differentiable at a position of the point representing the peripheral line L3).

### <3. Behavior of Shock-absorbing Member during Compression>

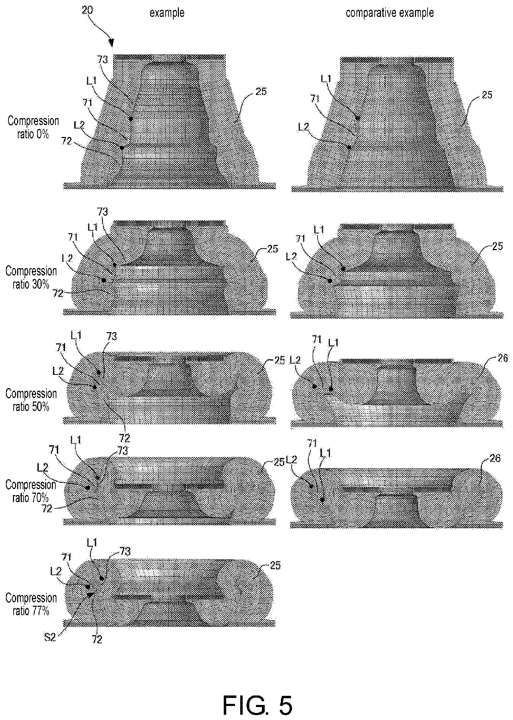

Next, a behavior of the shock-absorbing member 20 during compression is explained. The explanation is given in the following based on a result of a simulation actually performed by the present inventors with respect to the above-mentioned shock-absorbing member 20 (Example). The simulation was performed not only with respect to the shock-absorbing member 20 according to the Example but also with respect to a shock-absorbing member according to a Comparative Example. On the left side of FIG. 5, cross-sectional views of the shock-absorbing member 20 according to the Example at various compression ratios are shown; on the right side of FIG. 5, cross-sectional views of the shock-absorbing member according to the Comparative Example at various compression ratios are shown. As shown in the same figure, the shock-absorbing member according to the Comparative Example is obtained by omitting the second convex part 72 from the shock-absorbing member 20 according to the Example, and has the same configuration as the shock-absorbing member 20 in other respects.

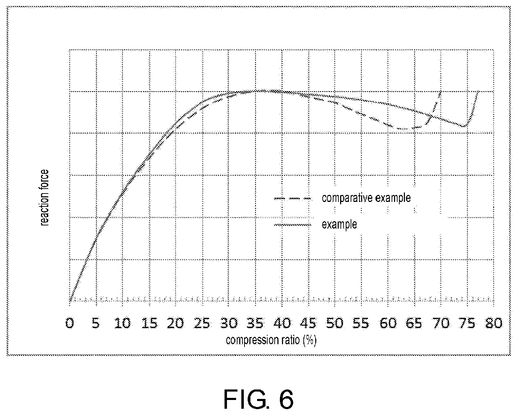

A structure of the shock-absorbing member 20 according to the Example when the compression ratio is 0% is as described above. That is, at the compression ratio of 0%, the body part 26 is roughly in the shape of a hollow truncated cone, and the presence of the first and second convex parts 71 and 72 can be confirmed on the inner surface 20a. FIG. 6 shows characteristic curves indicating a relationship between compression ratio and reaction force of the shock-absorbing members according to the Example and the Comparative Example. As shown in the same figure, in the shock-absorbing member 20 according to the Example, the reaction force reached the maximum value (corresponding to point P₁) at the compression ratio of about 35%, and buckling was started. At this moment, the shock-absorbing member 20 bent along the first peripheral line L1 and the second peripheral line L2, and the first convex part 71 was compressed between the second convex part 72 and a portion 73 opposite the second convex part 72. From this moment onward, as the compression progressed, the first convex part 71 gradually changed to a mountain shape describing a sharper curve. As a result, during buckling, a portion on the first convex part 71 side included in the second convex part 72 made surface contact along the peripheral direction with a portion on the second convex part 72 side included in the first convex part 71. Similarly, during buckling, a portion on the first convex part 71 side included in the portion 73 also made surface contact along the peripheral direction with a portion on the portion 73 side included in the first convex part 71. In addition, as the compression progressed, a central part 25 of the shock-absorbing member 20 in the direction A1 bent so as to protrude outward over the entire peripheral direction. At this moment, the first convex part 71 was disposed at a position facing a part of the central part 25 that protruded most outward. That is, the first convex part 71 was disposed inside a part of the shock-absorbing member 20 that bends so as to protrude outward during buckling of the shock-absorbing member 20.

Here, reference is made to the shock-absorbing member according to the Comparative Example. As shown in FIG. 6, in the shock-absorbing member according to the Comparative Example, similarly, the reaction force reached the maximum value (corresponding to point P₁) at the compression ratio of about 35%, and buckling was started. From this moment onward, as the compression progressed, the first convex part 71 began to fall toward the internal space S1 side. As shown in FIG. 5, when the compression ratio exceeded 50%, the first peripheral line L1 reached a position closer to the second end face 22a side (boarding surface side) along the direction A1 than the second peripheral line L2. In contrast, in the shock-absorbing member 20 according to the Example, the first convex part 71 was supported by the second convex part 72 after the start of the buckling, with the result that the first peripheral line L1 was maintained at a position closer to the first end face 21a side (ship side) along the direction A1 than the second peripheral line L2 even at the compression ratio of 50%. After that, the first peripheral line L1 was still maintained at the position closer to the first end face 21a side (ship side) along the direction A1 than the second peripheral line L2, was located on the first end face 21a side (ship side) even at the compression ratio of 70%, and was located on the first end face 21a side (ship side) even during maximum compression (during compression at the critical compression ratio).

As shown in FIG. 6, in the shock-absorbing member according to the Comparative Example in which the second convex part 72 was omitted, the critical compression ratio was 70%, whereas the critical compression ratio of the shock-absorbing member 20 according to the Example was 77%. That is, due to the presence of the second convex part 72, the critical compression ratio increased by 7%. In the shock-absorbing member 20 according to the Example, when the critical compression ratio was reached, the mountain shape of the first convex part 71 remained and a small gap S2 was formed on the mountain. On the other hand, in the shock-absorbing member according to the Comparative Example, the mountain of the first convex part 71 collapsed, and the first convex part 71 became substantially planar.

### <4. Modifications>

The above has explained several embodiments of the present invention. However, the present invention is not limited to the above embodiments but can be modified in various ways without departing from the scope that is defined by the appended claims.

<4-1>
While the shock-absorbing member 20 is roughly in the shape of a hollow truncated cone in the above embodiments, it is not limited to this shape and may be cylindrical, for example.

<4-2>
While the shock-absorbing member 20 is attached to the boarding surface 5 at the second end face 22a side larger in diameter in the above embodiments, it may also be attached to the boarding surface 5 at the first end face 21a side smaller in diameter.

<4-3>
The first convex part 71 and the second convex part 72 may not be adjacent to each other. That is, the boundary of the first convex part 71 being the boundary on the second convex part 72 side and the boundary of the second convex part 72 being the boundary on the first convex part 71 side may be defined by different peripheral lines. In addition, the second convex part 72 supporting the first convex part 71 protruding during buckling may be disposed closer to the ship side or to the first end face 21a side smaller in diameter than the first convex part 71 along the direction A1.

### Description of Reference Numerals

1: fender device
5: boarding surface
10: shock-receiving member
20: shock-absorbing member
20a: inner surface
21a: first end face
22a: second end face
25: central part (part bending so as to protrude outward during buckling)
71: first convex part
72: second convex part
A1: normal direction of boarding surface
L1: first peripheral line
L2: second peripheral line
L3: Third peripheral line

## Claims

1. A fender device (1) attached to a boarding surface (5) at which a ship berths, comprising:
a tubular shock-absorbing member (20), made of an elastic material, having a center axis extending in a normal direction of the boarding surface (5), compressed in a direction of the center axis, and buckling in a compression process,
wherein the shock-absorbing member (20) has an inner surface (20a), and comprises a first convex part (71) that is formed on the inner surface (20a) along a peripheral direction during non-compression and a second convex part (72) that is formed in the vicinity of the first convex part (71) on the inner surface (20a) along the peripheral direction during non-compression,
the inner surface (20a) comprises a first peripheral line (L1) defining a boundary of the first convex part (71) that is a boundary opposite the second convex part (72) and a second peripheral line (L2) defining a boundary of the first convex part (71) that is a boundary on a second convex part side, and a third peripheral line (L3) defining a boundary of the second convex part (72) that is a boundary opposite the first convex part (71),
the shock-absorbing member (20) bends along the first peripheral line (L1) and the second peripheral line (L2) during buckling, and
a line representing the inner surface (20a) on a cross section of the shock-absorbing member (20) is not smoothly continuous at a position of a point representing the first peripheral line (L1) during non-compression of the shock-absorbing member (20), and a line representing the inner surface (20a) on a cross section of the shock-absorbing member (20) is smoothly continuous before and after a point representing the third peripheral line (L3) during non-compression of the shock-absorbing member (20).

2. The fender device (1) according to claim 1, wherein
the first convex part (71) is disposed inside a part of the shock-absorbing member (20) that bends so as to protrude outward during buckling of the shock-absorbing member (20).

3. The fender device (1) according to claim 1 or 2, wherein
a boundary of the second convex part (72) on a first convex part side is defined by the second peripheral line.

4. The fender device according to any one of claims 1 to 3, wherein
during buckling of the shock-absorbing member (20), a portion on a first convex part side comprised in the second convex part (72) makes surface contact along the peripheral direction with a portion on the second convex part side comprised in the first convex part (71).

5. The fender device according to any one of claims 1 to 4, wherein
the shock-absorbing member (20) is roughly in a shape of a hollow truncated cone and has a first end face (21a) along the normal direction of the boarding surface (5) and a second end face (22a) larger in diameter than the first end face.

6. The fender device (1) according to claim 5, wherein
the second convex part (72) is disposed on a second end face side of the first convex part (71).

7. The fender device (1) according to claim 5 or 6, wherein
during 50% compression of the shock-absorbing member (20), the first peripheral line (L1) is located closer to a first end face side than the second peripheral line (L2).

8. The fender device (1) according to any one of claims 5 to 7, wherein
during 70% compression of the shock-absorbing member (20), the first peripheral line (L1) is located closer to a first end face side than the second peripheral line (L2).

9. The fender device according to any one of claims 5 to 8, wherein
during compression of the shock-absorbing member (20) at a critical compression ratio, the first peripheral line (L1) is located closer to a first end face side than the second peripheral line (L2).

10. The fender device (1) according to any one of claims 1 to 9, wherein
the first convex part (71) is continuously formed over an entire circumference of the inner surface (20a) of the shock-absorbing member (20).

11. The fender device (1) according to any one of claims 1 to 10, wherein
the second convex part (72) is continuously formed over an entire circumference of the inner surface (20a) of the shock-absorbing member (20).

12. The fender device (1) according to any one of claims 1 to 11, further comprising
a shock-receiving member (10) disposed on a ship side of the shock-absorbing member (20) and contacting the ship.

## Patentansprüche

1. Fendervorrichtung (1), die an einer Einstiegsfläche (5), an der ein Schiff anlegt, befestigt ist, umfassend:
ein röhrenförmiges stoßdämpfendes Element (20), das aus einem elastischen Material hergestellt ist, eine Mittelachse aufweist, die sich in einer normalen Richtung der Einstiegsfläche (5) erstreckt, in einer Richtung der Mittelachse komprimiert wird und bei einem Kompressionsvorgang sich verformt,
wobei das stoßdämpfende Element (20) eine Innenfläche (20a) aufweist und ein erstes konvexes Teil (71), das auf der Innenfläche (20a) entlang einer Umfangsrichtung während Nicht-Kompression ausgebildet ist, und ein zweites konvexes Teil (72) umfasst, das in der Nähe des ersten konvexen Teils (71) auf der Innenfläche (20a) entlang der Umfangsrichtung während Nicht-Kompression ausgebildet ist,
die Innenfläche (20a), umfassend eine erste Umfangslinie (L1), die eine Begrenzung des ersten konvexen Teils (71) definiert, die eine Begrenzung gegenüber dem zweiten konvexen Teil (72) ist, und eine zweite Umfangslinie (L2), die eine Begrenzung des ersten konvexen Teils (71) definiert, die eine Begrenzung auf einer zweiten konvexen Teilseite ist, und eine dritte Umfangslinie (L3), die eine Begrenzung des zweiten konvexen Teils (72) definiert, die eine Begrenzung gegenüber dem ersten konvexen Teil (71) ist,
wobei das stoßdämpfende Element (20) sich während der Verformung entlang der ersten Umfangslinie (L1) und der zweiten Umfangslinie (L2) biegt, und
eine Linie, die die Innenfläche (20a) auf einem Querschnitt des stoßdämpfenden Elements (20) darstellt, an einer Position eines Punktes, der die erste Umfangslinie (L1) darstellt, während der Nicht-Kompression des stoßdämpfenden Elements (20), nicht gleichmäßig kontinuierlich ist, und eine Linie, die die Innenfläche (20a) auf einem Querschnitt des stoßdämpfenden Elements (20) darstellt, vor und nach einem Punkt, der die dritte Umfangslinie (L3) darstellt, während der Nicht-Kompression des stoßdämpfenden Elements (20), gleichmäßig kontinuierlich ist.

2. Fendervorrichtung (1) gemäß Anspruch 1, wobei
das erste konvexe Teil (71) innerhalb eines Teils des stoßdämpfenden Elements (20) angeordnet ist, das sich so biegt, dass es während der Verformung des stoßdämpfenden Elements (20) nach außen ragt.

3. Fendervorrichtung (1) gemäß Anspruch 1 oder 2, wobei
eine Begrenzung des zweiten konvexen Teils (72) auf einer ersten konvexen Teilseite durch die zweite Umfangslinie definiert ist.

4. Fendervorrichtung gemäß einem der Ansprüche 1 bis 3, wobei
während der Verformung des stoßdämpfenden Elements (20) ein Abschnitt auf einer ersten konvexen Teilseite, die in dem zweiten konvexen Teil (72) umfasst ist, Flächenkontakt entlang der Umfangsrichtung mit einem Abschnitt auf der zweiten konvexen Teilseite, die in dem ersten konvexen Teil (71) umfasst ist, herstellt.

5. Fendervorrichtung gemäß einem der Ansprüche 1 bis 4, wobei
das stoßdämpfende Element (20) ungefähr in einer Form eines hohlen Kegelstumpfs ist und eine erste Endfläche (21a) entlang der normalen Richtung der Einstiegsfläche (5) und eine zweite Endfläche (22a) mit einem größeren Durchmesser als die erste Endfläche aufweist.

6. Fendervorrichtung (1) gemäß Anspruch 5, wobei
das zweite konvexe Teil (72) an einer zweiten Endflächenseite des ersten konvexen Teils (71) angebracht ist.

7. Fendervorrichtung (1) gemäß Anspruch 5 oder 6, wobei
während einer 50%igen Kompression des stoßdämpfenden Elements (20), die erste Umfangslinie (L1) sich näher an einer ersten Endflächenseite als die zweite Umfangslinie (L2) befindet.

8. Fendervorrichtung (1) gemäß einem der Ansprüche 5 bis 7, wobei
während der 70%igen Kompression des stoßdämpfenden Elements (20), die erste Umfangslinie (L1) sich näher an einer ersten Endflächenseite als die zweite Umfangslinie (L2) befindet.

9. Fendervorrichtung gemäß einem der Ansprüche 5 bis 8, wobei
während der Kompression des stoßdämpfenden Elements (20) bei einem kritischen Kompressionsverhältnis sich die erste Umfangslinie (L1) näher an einer ersten Endflächenseite als die zweite Umfangslinie (L2) befindet.

10. Fendervorrichtung (1) gemäß einem der Ansprüche 1 bis 9, wobei
das erste konvexe Teil (71) kontinuierlich über einen gesamten Umfang der Innenfläche (20a) des stoßdämpfenden Elements (20) ausgebildet ist.

11. Fendervorrichtung (1) gemäß einem der Ansprüche 1 bis 10, wobei
das zweite konvexe Teil (72) kontinuierlich über den gesamten Umfang der Innenfläche (20a) des stoßdämpfenden Elements (20) ausgebildet ist.

12. Fendervorrichtung (1) gemäß einem der Ansprüche 1 bis 11, ferner umfassend
ein stoßaufnehmendes Element (10), das auf einer Schiffsseite des stoßdämpfenden Elements (20) angebracht ist und das Schiff berührt.

## Revendications

1. Dispositif de défense (1) attaché à une surface d'embarquement (5) à laquelle un navire accoste, comprenant :
un élément amortisseur tubulaire (20) constitué d'un matériau élastique, ayant un axe central qui s'étend dans une direction normale à la surface d'embarquement (5), comprimé en direction de l'axe central et flambant lors d'un processus de compression,
dans lequel l'élément amortisseur (20) comporte une surface interne (20a) et une première partie convexe (71), qui est formée sur la surface interne (20a) selon une direction périphérique durant la non-compression, et une deuxième partie convexe (72), qui est formée à proximité de la première partie convexe (71) sur la surface interne (20a) selon la direction périphérique durant la non-compression,
la surface interne (20a) comprend une première ligne périphérique (L1) définissant une délimitation de la première partie convexe (71), qui est une délimitation opposée à la deuxième partie convexe (72), et une deuxième ligne périphérique (L2) définissant une délimitation de la première partie convexe (71), qui est une délimitation sur un deuxième côté de la partie convexe, et une troisième ligne périphérique (L3) définissant une délimitation de la deuxième partie convexe (72), qui est une délimitation opposée à la première partie convexe (71),
l'élément amortisseur (20) fléchit le long de la première ligne périphérique (L1) et de la deuxième ligne périphérique (L2) lors du flambage, et
une ligne représentant la surface interne (20a) dans une section transversale de l'élément amortisseur (20) n'est pas continue de manière régulière à une position d'un point représentant la première ligne périphérique (L1) durant la non-compression de l'élément amortisseur (20), et une ligne représentant la surface interne (20a) dans une section transversale de l'élément amortisseur (20) est continue de manière régulière avant et après un point représentant la troisième ligne périphérique (L3) durant la non-compression de l'élément amortisseur (20) .

2. Dispositif de défense (1) selon la revendication 1, dans lequel
la première partie convexe (71) est disposée à l'intérieur d'une partie de l'élément amortisseur (20) qui fléchit de manière à ressortir vers l'extérieur durant le flambage de l'élément amortisseur (20).

3. Dispositif de défense (1) selon la revendication 1 ou 2, dans lequel
une délimitation de la deuxième partie convexe (72) sur un côté de la première partie convexe est définie par la deuxième ligne périphérique.

4. Dispositif de défense selon l'une quelconque des revendications 1 à 3, dans lequel
durant le flambage de l'élément amortisseur (20), une portion sur un côté de la première partie convexe comprise dans la deuxième partie convexe (72) établit un contact de surface selon la direction périphérique avec une portion sur le côté de la deuxième partie convexe comprise dans la première partie convexe (71).

5. Dispositif de défense selon l'une quelconque des revendications 1 à 4, dans lequel
l'élément amortisseur (20) a grossièrement la forme d'un tronc de cône creux et comporte une première face d'extrémité (21a) selon la direction normale de la surface d'embarquement (5) et une deuxième face d'extrémité (22a) dont le diamètre est supérieur à celui de la première face d'extrémité.

6. Dispositif de défense (1) selon la revendication 5, dans lequel
la deuxième partie convexe (72) est disposée sur un côté de la deuxième face d'extrémité de la première partie convexe (71).

7. Dispositif de défense (1) selon la revendication 5 ou 6, dans lequel
durant une compression à 50 % de l'élément amortisseur (20), la première ligne périphérique (L1) est située plus près d'un côté de la première face d'extrémité que la deuxième ligne périphérique (L2).

8. Dispositif de défense (1) selon l'une quelconque des revendications 5 à 7, dans lequel
lors d'une compression à 70 % de l'élément amortisseur (20), la première ligne périphérique (L1) est située plus près d'un côté de la première face d'extrémité que la deuxième ligne périphérique (L2).

9. Dispositif de défense selon l'une quelconque des revendications 5 à 8, dans lequel
durant la compression de l'élément amortisseur (20) à un taux de compression critique, la première ligne périphérique (L1) est située plus près d'un côté de la première face d'extrémité que la deuxième ligne périphérique (L2).

10. Dispositif de défense (1) selon l'une quelconque des revendications 1 à 9, dans lequel
la première partie convexe (71) est formée de manière continue sur toute une circonférence de la surface interne (20a) de l'élément amortisseur (20).

11. Dispositif de défense (1) selon l'une quelconque des revendications 1 à 10, dans lequel
la deuxième partie convexe (72) est formée de manière continue sur toute une circonférence de la surface interne (20a) de l'élément amortisseur (20).

12. Dispositif de défense (1) selon l'une quelconque des revendications 1 à 11, comprenant en outre
un élément de réception de choc (10) disposé sur un côté navire de l'élément amortisseur (20) et en contact avec le navire.
